(19)

**Europäisches Patentamt**
**European Patent Office**
**Office européen des brevets**

(11) **EP 1 586 491 B1**

(12) **EUROPÄISCHE PATENTSCHRIFT**

(45) Veröffentlichungstag und Bekanntmachung des Hinweises auf die Patenterteilung:
**02.05.2007 Patentblatt 2007/18**

(51) Int Cl.:
*B60T 8/00* (2006.01)     *B60T 8/40* (2006.01)
*H02K 5/22* (2006.01)     *H02K 7/08* (2006.01)

(21) Anmeldenummer: **04006710.0**

(22) Anmeldetag: **19.03.2004**

(54) **Steckverbindung eines Motor-Pumpen-Aggregats eines ABS**

Electrical connection of motor-pump unit for an ABS

Connection electrique d'un groupe moto-pompe pour un ABS

(84) Benannte Vertragsstaaten:
**DE FR**

(43) Veröffentlichungstag der Anmeldung:
**19.10.2005 Patentblatt 2005/42**

(73) Patentinhaber: **SIEMENS AKTIENGESELLSCHAFT**
**80333 München (DE)**

(72) Erfinder: **Tupy, Matthias**
**97218 Gerbrunn (DE)**

(56) Entgegenhaltungen:
**EP-B- 0 698 183      WO-A-96/28327**
**WO-A-02/057121      WO-A-02/057124**
**US-A- 5 811 902      US-A- 5 895 207**
**US-A- 6 011 341**

## Beschreibung

Die Erfindung betrifft ein Motor-Pumpen-Aggregat, das in axialer Sandwich-Hintereinanderanordnung ein Motorgehäuse, ein Pumpengehäuse und ein Elektronikgehäuse aufweist. Ein derartiges Motor-Pumpen-Aggregat kann insbesondere in Kraftfahrzeug-Antiblockierbremsvorrichtungen verwendet werden.

Aus der EP 0 698 183 B1 die den Oberbegriff bildet, ist bereits ein Elektromotor-Pumpen-Aggregat bekannt, bei welchem das Elektromotorgehäuse mit dem Pumpengehäuse kontaktiert ist. Bei diesem bekannten Aggregat ist an den Kontaktstellen zwischen dem Elektromotorgehäuse und dem Pumpengehäuse eine eine Abdichtung bildende Trägerplatte vorgesehen, an welcher Schleifbürsten befestigt sind. Das Pumpengehäuse ist mit einer Durchgangsbohrung versehen, die eine als Kabelstrang ausgebildete elektrische Anschlusskomponente aufnimmt. Der durch das Pumpengehäuse geführte Kabelstrang ist auf der vom Motorgehäuse abgelegenen Seite des Pumpengehäuses mittels einer Steckverbindung mit einer als Energieversorgung wirksamen Steuer- und Regelelektronik kontaktiert. Gemäß einer weiteren Ausführungsform sind die Kabel der Stromzuführung in ein Stanzgitter eingelegt, das mit Kunststoff umspritzt ist. Der Kunststoff wird an das Gehäuse der elektronischen Regeleinheit angespritzt, so dass das Gehäuse der elektronischen Regeleinheit und die Kabeldurchführung einen integralen Bestandteil bilden. An dem dem Motor zugewandten Ende der Kabeldurchführung ist ein Stecker vorgesehen, der in einen Gegenstecker des Lagerschildes eingesteckt ist. Alternativ dazu kann die Kabeldurchführung auch als Einzelteil realisiert werden, das an beiden Enden Stecker am Elektromotor, der andere Stecker einen Gegenstecker der elektronischen Regeleinheit. Gemäß einer weiteren Alternative kann die Kabeldurchführung aus zwei Teilen hergestellt werden, wobei jedes Teil eine Ader aufweist. Die beiden Teile sind symmetrisch zueinander ausgebildet und können zu einer Kabeldurchführung zusammengesteckt werden. Zu diesem Zweck sind die einzelnen Elemente mit zueinander passenden Nasen bzw. Vertiefungen versehen.

Aus der WO 96/28 327 A1 ist ein elektrohydraulisches Aggregat zur Bremsflüssigkeitsdruckregelung bekannt. Dieses bekannte Aggregat weist einen Hydraulikblock auf, auf dessen einer Seite ein Elektromotor angebracht ist. Die elektrischen Anschlüsse des Elektromotors ragen durch den Hydraulikblock hindurch auf die gegenüberliegende Seite und sind dort mit elektrischen Leitern eines Anbau-Steuergerätes oder Vielfachsteckers verbunden. Die genannten elektrischen Leiter sind wendelförmig um Führungsstifte gewickelt. Diese ragen zur Positionierung des Anbau-Steuergerätes oder Vielfachsteckers am Hydraulikblock bei der Montage in Sackbohrungen des Hydraulikblocks hinein, so dass freie Enden der elektrischen Leiter in gabelförmig ausgebildete Enden der Anschlussstifte gelangen, bevor das Anbau-Steuergerät oder der Vielfachstecker die Anschlüsse abdeckt.

Aus der WO 02/057 121 A1 ist ein Motor-Pumpen-Aggregat bekannt, das in axialer Sandwich-Hintereinanderanordnung ein Motorgehäuse, ein Pumpengehäuse und ein Elektronikgehäuse aufweist. Von dem Motorgehäuse führen zumindest zwei gegeneinander elektrisch isolierte steckerartige Versorgungs- bzw. Steuerleitungen durch das Pumpengehäuse hindurch zum dem Elektronikgehäuse. Die steckerartigen Versorgungs- bzw. Steuerleitungen sind motorgehäuseseitig in einem Sockel, insbesondere in einer Bürstenplatte, fest fixiert und im übrigen quer zu ihrer Längserstreckung zumindest im Sinne von Toleranzausgleichungen frei beweglich. Die steckerartigen Versorgungs- bzw. Steuerleitungen sind Teile, insbesondere einstückige abgebogene Biegestanzteile, eines von dem Sockel, insbesondere der Bürstenplatte, aufgenommenen Stanzgitters. Die steckerartigen Versorgungs- bzw. Steuerleitungen sind in eine elastische Isolierhülse eingebettet und mit ihren vom Motorgehäuse abgewandten freien Enden mit einer Elektronikeinheit in dem Elektronikgehäuse, insbesondere einer Leiterplatte, kontaktiert.

Die Aufgabe der Erfindung besteht darin, einen Weg aufzuzeigen, wie bei einem Motor-Pumpen-Aggregat, bei welchem elektrische Leitungen durch das Pumpengehäuse geführt werden, der Platzbedarf für das Durchführen der Leitungen klein gehalten werden kann.

Diese Aufgabe wird durch ein Motor-Pumpen-Aggregat mit den im Anspruch 1 angegebenen Merkmalen gelöst. Vorteilhafte Ausgestaltungen und Weiterbildungen der Erfindung ergeben sich aus den abhängigen Ansprüchen 2 - 10. Die Ansprüche 11 - 14 haben eine elektrische Verbindungsvorrichtung zum Gegenstand, die im Zusammenhang mit der Erfindung verwendet werden kann.

Die Vorteile der Erfindung bestehen insbesondere darin, dass durch eine Kröpfung der elektrischen Leitungen innerhalb der Isolierhülse erreicht werden kann, dass die elektrischen Leitungen im Bereich des Pumpengehäuses einen Abstand voneinander haben, der kleiner ist als der Abstand, den die elektrischen Leitungen zur Kontaktierung mit dem Motor und/oder der Elektronik benötigen. Der zur Kontaktierung mit dem Motor und/oder der Elektronik benötigte Abstand der elektrischen Leitungen voneinander kann durch die genannte Kröpfung der elektrischen Leitungen, die vorzugsweise als Flachstecker-Zungen ausgebildet sind, hergestellt werden.

Dabei wird in vorteilhafter Weise von den unterschiedlichen Anforderungen Gebrauch gemacht, die innerhalb und außerhalb des Pumpengehäuses vorliegen. Innerhalb des Pumpengehäuses ist darauf zu achten, dass stets ein vorgegebener minimaler Sicherheitsabstand zwischen den elektrischen Leitungen und den Rändern der Pumpendurchbohrung eingehalten wird, um Spannungsdurchschläge zu vermeiden. Dies wird durch eine ausreichende Dicke der Isolierhülse sichergestellt. Außerhalb des Pumpengehäuses ist das Einhalten eines derartigen Sicherheitsabstandes nicht nötig. Der Wegfall dieses Erfordernisses wird gemäß der vorliegenden Erfindung dazu genutzt, außerhalb des Pumpengehäuses eine Kröpfung der elektrischen Leitungen derart vorzunehmen, dass der Abstand der innerhalb der Isolierhülse verlaufenden elektrischen Leitungen voneinander vergrößert wird. Dass dabei in diesem Bereich der Abstand der elektrischen Leitungen vom Außenrand der Isolierhülse kleiner ist als der oben genannte Sicherheitsabstand ist unerheblich, da die Kröpfung der elektrischen Leitungen außerhalb des Bereiches des Pumpengehäuses erfolgt.

Ein wesentlicher Vorteil der Erfindung besteht darin, dass die Kröpfung der elektrischen Leitungen in Abhängigkeit von jeweils vorliegenden individuellen Kundenanforderungen vorgenommen werden kann. Insbesondere verwenden die Hersteller von Motoren und auch die Hersteller der Elektronik verschieden dimensionierte Gegenstecker am Motor bzw. der Elektronik, insbesondere Gegenstecker, bei denen der Abstand der zu kontaktierenden elektrischen Leitungen unterschiedlich groß ist.

Diese unterschiedlichen Anforderungen können durch eine jeweils angepasste Kröpfung der Leitungen erfüllt werden.

Diese Kröpfung kann in vorteilhafter Weise einseitig in Richtung des Motors, einseitig in Richtung der Elektronik oder beidseitig erfolgen. Wichtig ist, dass der Außendurchmesser der Isolierhülse, die beim Zusammenbau der Komponenten Motor, Pumpe und Elektronik vollständig durch das Pumpengehäuse geführt werden muss, beidseits der Kröpfung bzw. Kröpfungen übereinstimmt, so dass das Durchführen der Isolierhülse durch die Bohrung des Pumpengehäuses in keinster Weise behindert wird.

Gemäß einer vorteilhaften Weiterbildung der Erfindung können die elektrischen Leitungen der Isolierhülse jeweils mit einer Stufe versehen sein, so dass die Breite der elektrischen Leitungen an den beiden axialen Enden der Isolierhülse unterschiedlich ist. Auch durch diese Maßnahme können Anforderungen, die auf unterschiedliche Gegensteckertypen zurückzuführen sind, erfüllt werden.

Eine weitere vorteilhafte Ausführungsform der Erfindung besteht darin, die elektrischen Leitungen inklusive der Isolierhülse als einstückiges Bauteil mit dem Motorgehäuse zu realisieren. Beim Zusammenbau des gesamten Aggregates können in diesem Fall die elektrischen Leitungen inklusive der Isolierhülse durch eine Bohrung im Pumpengehäuse gesteckt und auf der anderen Seite des Pumpengehäuses beispielsweise unter Verwendung eines Gegensteckers mit der Elektronik kontaktiert werden.

Eine andere vorteilhafte Ausführungsform der Erfindung besteht darin, die elektrischen Leitungen inklusive der Isolierhülse als einstückiges Bauteil mit dem Elektronikgehäuse zu realisieren. Beim Zusammenbau des gesamten Aggregates können in diesem Fall die elektrischen Leitungen inklusive der Isolierhülse durch eine Bohrung im Pumpengehäuse gesteckt und auf der anderen Seite des Pumpengehäuses beispielsweise unter Verwendung eines Gegensteckers mit dem Motorgehäuse kontaktiert werden.

Eine weitere alternative Ausführungsform der Erfindung besteht darin, die elektrischen Leitungen inklusive der Isolierhülse als eigenständiges Bauteil zu realisieren. Dieses kann beim Zusammenbau des gesamten Aggregates - egal von welcher Seite aus - durch eine Bohrung im Pumpengehäuse gesteckt und dann beidseitig unter Verwendung jeweils eines Gegensteckers mit dem Motorgehäuse bzw. dem Elektronikgehäuse verbunden werden.

Dabei können durch eine jeweils geeignete Kröpfung der elektrischen Leitungen die Abstände zwischen den Leitungen, die vorzugsweise als Flachstecker-Zungen ausgebildet sind, an den jeweils vorhandenen Gegenstecker angepasst werden. Der Außendurchmesser der Isolierhülse bleibt trotz der erfolgten Kröpfung stets gleich, so dass das Durchführen der die elektrischen Leitungen beinhaltenden Isolierhülse durch die Bohrung im Pumpengehäuse nicht beeinträchtigt wird und die Bohrung im Pumpengehäuse klein gehalten werden kann.

Weitere vorteilhafte Eigenschaften der Erfindung ergeben sich aus deren beispielhafter Erläuterung anhand der Zeichnungen. Es zeigt:

Figur 1    in einem axialen Teilschnittbild ein komplett montiertes Motor-Pumpen-Aggregat;

Figur 2    als Vormontage-Einheit das Motorgehäuse mit Versorgungs- bzw. Steuerleitungsanschluss zu dem Elektronikgehäuse;

Figur 3    eine Skizze zur Veranschaulichung einer ersten Ausführungsform der Erfindung;

Figur 4    eine Skizze zur Veranschaulichung einer Weiterbildung der Erfindung;

Figur 5    eine Skizze zur Veranschaulichung einer zweiten Ausführungsform der Erfindung;

Figur 6    eine Skizze zur Veranschaulichung einer dritten Ausführungsform der Erfindung und

Figur 7    eine Skizze zur Veranschaulichung einer vierten Ausführungsform der Erfindung.

Die Erfindung betrifft ein Motor-Pumpen-Aggregat, das in axialer Sandwich-Hintereinanderanordnung ein Motorgehäuse, ein Pumpengehäuse und ein Elektronikgehäuse aufweist. Ein derartiges Motor-Pumpen-Aggregat kann insbesondere in Kraftfahrzeug-Antiblockierbremsvorrichtungen verwendet werden. Bei dem Motor-Pumpen-Aggregat gemäß der Erfindung werden die elektrischen Leitungen, die das innerhalb des Motorgehäuses angeordnete Bürstensystem mit der innerhalb des Elektronikgehäuses angeordneten Steuer- und Regeleinheit verbinden, durch eine Bohrung des Pumpengehäuses geführt.

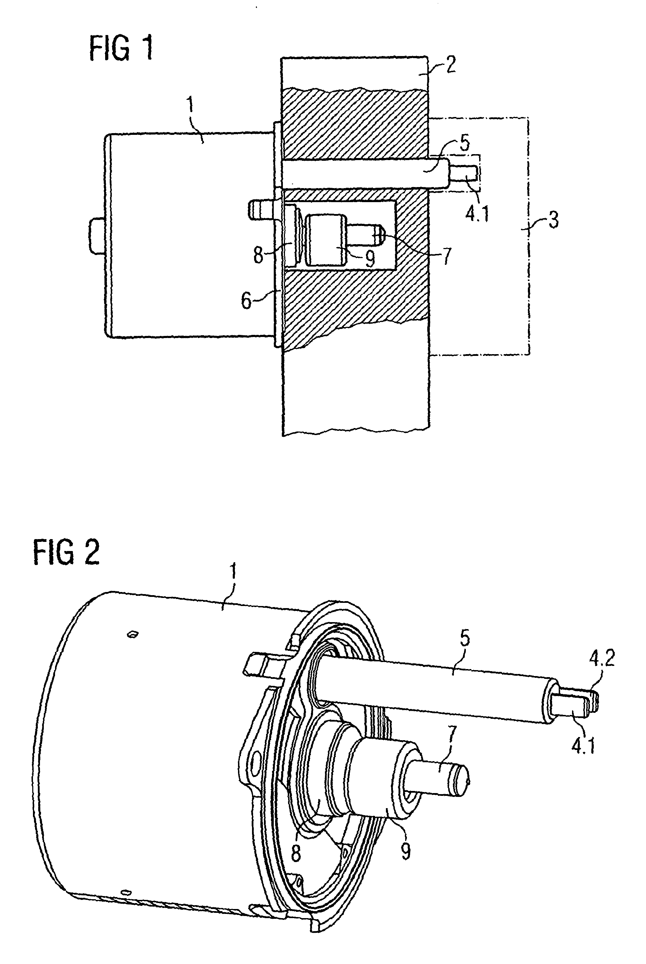

Die Figur 1 zeigt in einem axialen Teilschnittbild ein komplettes, beispielsweise für eine Kraftfahrzeug-Antiblockierbremsvorrichtung einsetzbares Motor-Pumpen-Aggregat. An ein topfförmiges Motorgehäuse 1 eines Kommutator-Elektromotors ist mit seiner einen Stirnfläche ein Pumpengehäuse 2 einer Hochdruckpumpe für eine Brems-Hydraulikflüssigkeit abgedichtet angeflanscht. An der anderen Stirnfläche des Pumpengehäuses 2 ist ein Elektronikgehäuse 3 angebaut. Dieses enthält eine beispielsweise in Form einer Leiterplatte realisierte Anschlusseinheit, insbesondere eine Versorgungs- bzw. Steuereinheit für den Kommutator-Elektromotor.

Im Bereich der Topfrandseite ist das Motorgehäuse 1 durch eine Bürstenplatte 6 abgeschlossen, aus der die in einem Lager 8 gelagerte Rotorwelle 7 des Kommutator-Elektromotors mit einem Wellenende herausragt. Dieses trägt einen Exzenter 9, von dem Pumpenstößel der Hochdruckpumpe angetrieben werden.

Zur elektrischen Verbindung zwischen dem Elektronikgehäuse 3 und den von der Bürstenplatte 6 aufgenommenen elektrischen Bauteilen, insbesondere den Bürsten, dienen zungenförmige Versorgungs- bzw. Steuerleitungen 4.1 und 4.2, die - wie auch aus der Figur 2 ersichtlich ist - innerhalb des Pumpengehäuses 2 im wesentlichen senkrecht zur Ebene der Bürstenplatte 6 verlaufen.

Wie aus der Figur 2 hervorgeht, sind die von einer Isolierhülse 5 umgebenen zungenartigen elektrischen Leitungen 4.1 und 4.2 im Sinne einer Vormontage-Baueinheit mit ihren motorgehäuseseitigen Enden in der Bürstenplatte fixiert, beispielsweise in Form einer Einstückigkeit mit einem in die Bürstenplatte eingespritzten Stanzgitter. Dieses dient zum Anschluss der von der Bürstenplatte aufgenommenen Bauelemente und der zunächst in der Ebene des Stanzgitters mitgestanzten zungenartigen elektrischen Verbindungen 4.1 und 4.2, die abgebogen und senkrecht aus dieser Ebene herausgeführt sind.

Die Isolierhülse 5 dient zur elektrischen Isolierung der elektrischen Leitungen 4.1 und 4.2. Sie ist elastisch ausgebildet, axial auf die elektrischen Leitungen 4.1 und 4.2 aufgesteckt und durch eine Verrastung fixiert. Durch die Elastizität der Isolierhülse 5 ist sichergestellt, dass die motorgehäuseabgewandten Enden der Leitungen beim Zusammenbau von Motorgehäuse 1, Pumpengehäuse 2 und Elektronikgehäuse 3 trotz möglichen gegenseitigen Versatzes der zusammenzubauenden Gehäuseteile toleranzausgleichend quer zu ihrer axialen Erstreckungsrichtung ausweichen können. Dadurch ist eine problemlose Durchführung durch die Bohrung des Pumpengehäuses und die Gehäusestirnfläche des Elektronikgehäuses gewährleistet.

Bei der in der Figur 2 gezeigten Ausführungsform ist trotz axialem Sandwich-Zusammenbau von Motorgehäuse, Pumpengehäuse und Elektronikgehäuse bei einfacher Fertigungs- und Montagetechnik eine verspannungsfreie Steckerverbindung der elektrischen Leitungen 4.1 und 4.2 zwischen der Bürstenplatte in dem Motorgehäuse durch das Pumpengehäuse hindurch zu dem Elektronikgehäuse möglich. Dabei sind die genannten elektrischen Leitungen feststeckerartig mit ihren motorgehäuseseitigen Enden als Vormontage-Bauteileinheit in der Bürstenplatte, insbesondere als abgebogener einstückiger Teil eines darin eingespritzten Stanzgitters fixiert. Weiterhin sind sie mit ihren freien Steckerenden, von einer elastischen Isolierhülse umgeben, quer zu ihrer axialen Eingangserstreckung toleranzausgleichend beweglich.

Um den Durchmesser der durch das Pumpengehäuse führenden Bohrung so klein wie möglich halten zu können, ist der Abstand zwischen den innerhalb der Isolierhülse 5 befindlichen elektrischen Leitungen voneinander und der Abstand jeder dieser Leitungen vom Rand der durch das Pumpengehäuse führenden Bohrung so klein wie möglich gehalten. Bei der Bemessung dieser Abstände ist lediglich darauf zu achten, dass keine Spannungsdurchschläge auftreten. Dies ist durch eine entsprechende Dicke des Materials der Isolierhülse 5 sichergestellt.

Um trotz der engen Führung der elektrischen Leitungen im Bereich des Pumpengehäuses einen Steckkontakt mit einem Gegenstecker am Motorgehäuse und/oder dem Elektronikgehäuse zu ermöglichen, weisen die elektrischen Leitungen gemäß der vorliegenden Erfindung eine Kröpfung auf. Diese Kröpfung erfolgt in vorteilhafter Weise zwar außerhalb des Bereichs des Pumpengehäuses, aber noch innerhalb des Bereichs der Isolierhülse. Dies wird nachfolgend anhand mehrerer Ausführungsformen näher erläutert.

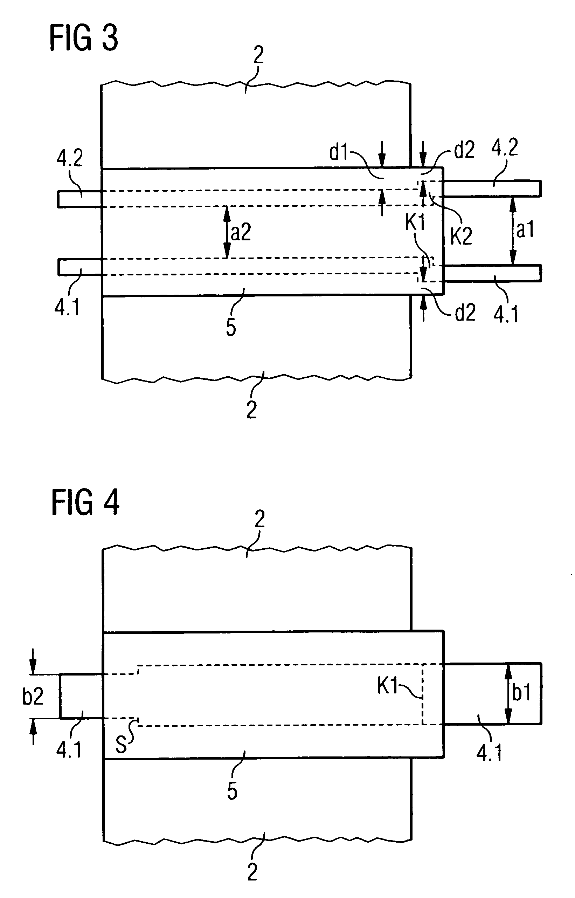

Die Figur 3 zeigt eine Skizze zur Veranschaulichung einer ersten Ausführungsform der Erfindung. Gemäß dieser Ausführungsform ist durch eine Bohrung im Pumpengehäuse 2 eine elektrische Verbindungsvorrichtung geführt, die elektrische Leitungen 4.1 und 4.2 aufweist, die in Form von Flachstecker-Zungen ausgeführt sind. Diese elektrischen Leitungen verlaufen innerhalb der Isolierhülse 5. Das motorgehäuseseitige Ende der Isolierhülse 5 liegt in einer Flucht mit der motorgehäuseseitigen Stirnseite des Pumpengehäuses 2. Das elektronikgehäuseseitige Ende der Isolierhülse 5 ragt über die elektronikgehäuseseitige Stirnseite des Pumpengehäuses 2 hinaus. Innerhalb des Bereiches des Pumpengehäuses 2 weisen die elektrischen Leitungen 4.1 und 4.2 einen Abstand a2 voneinander auf. Mit diesem Abstand voneinander sind die genannten Leitungen am motorgehäuseseitigen Ende der Isolierhülse 5 aus dieser herausgeführt und können in einen Gegenstecker am Motorgehäuse eingeführt werden, dessen Gegensteckerkontakte ebenfalls den Abstand a2 voneinander haben. Innerhalb des Bereichs des Pumpengehäuses weisen die elektrischen Leitungen 4.1 und 4.2 vom Rand der Bohrung des Pumpengehäuses stets einen Mindestabstand d1 auf. Dieser Mindestabstand ist notwendig, um im Betrieb ein Auftreten von Spannungsüberschlägen zu vermeiden. Außerhalb des Bereichs des Pumpengehäuses, aber noch innerhalb des Bereichs der Isolierhülse ist die Leitung 4.1 mit einer Kröpfung K1 und die Leitung 4.2 mit einer Kröpfung K2 versehen. Durch diese Kröpfungen wird erreicht, dass die elektrischen Leitungen 4.1 und 4.2 bei ihrem elektronikgehäuseseitigen Austritt aus der Isolierhülse 5 einen Abstand a1 voneinander haben, wobei gilt:

$$a2 < a1.$$

Dass durch diese Kröpfungen der Abstand d2 der Leitungen 4.1 und 4.2 vom äußeren Rand der Isolierhülse 5 kleiner ist als d1, ist unerheblich, da in diesem Bereich, der außerhalb des Bereichs des Pumpengehäuses liegt, keine Gefahr von Spannungsüberschlägen besteht.

Die mit dem Abstand a1 aus der Isolierhülse 5 austretenden elektrischen Leitungen bzw. Flachstecker-Zungen können in einen Gegenstecker des Elektronikgehäuses eingesteckt werden, dessen Gegensteckerkontakte ebenfalls den Abstand a1 haben.

Durch die beschriebene Kröpfung der elektrischen Leitungen wird nach alledem erreicht, dass diese Leitungen im Bereich des Pumpengehäuses eng beieinander geführt werden können, wodurch die durch das Pumpengehäuse gehende Bohrung klein gehalten werden kann, und dass die Leitungen dennoch mit einem vorhandenen Gegenstecker kontaktiert werden können, dessen Gegensteckerkontakte einen Abstand voneinander haben, der größer ist als der Abstand, mit welchem die Leitungen im Bereich des Pumpengehäuses geführt werden.

Wie aus der Figur 3 weiterhin ersichtlich ist, ist der Außendurchmesser der Isolierhülse 5 trotz der Kröpfung der Leitungen stets gleich, so dass das Durchstecken der elektrischen Verbindungsvorrichtung durch die Bohrung des Pumpengehäuses nicht beeinträchtigt ist.

Die Figur 4 zeigt eine Skizze zur Veranschaulichung einer vorteilhaften Weiterbildung der Erfindung. Gemäß dieser Weiterbildung enthalten die elektrischen Leitungen 4.1 und 4. 2 im Bereich der Isolierhülse 5 und auch im Bereich des Pumpengehäuses 2 eine Stufe S. Durch diese Stufe S wird die Breite der elektrischen Leitungen von b1 auf b2 verringert. Durch diese Maßnahme wird es ermöglicht, die genannten Leitungen mit einem motorgehäuseseitigen Gegenstecker zu kontaktieren, dessen Gegensteckerkontakte eine Breite b2 haben.

Diese Veränderung der Breite der elektrischen Leitungen kann unabhängig von einer Kröpfung der Leitungen erfolgen. Auch bei dieser Veränderung der Breite der elektrischen Leitungen ist darauf zu achten, dass der zur Vermeidung von Spannungsüberschlägen erforderliche Mindestabstand vom Rand der Bohrung des Pumpengehäuses eingehalten wird.

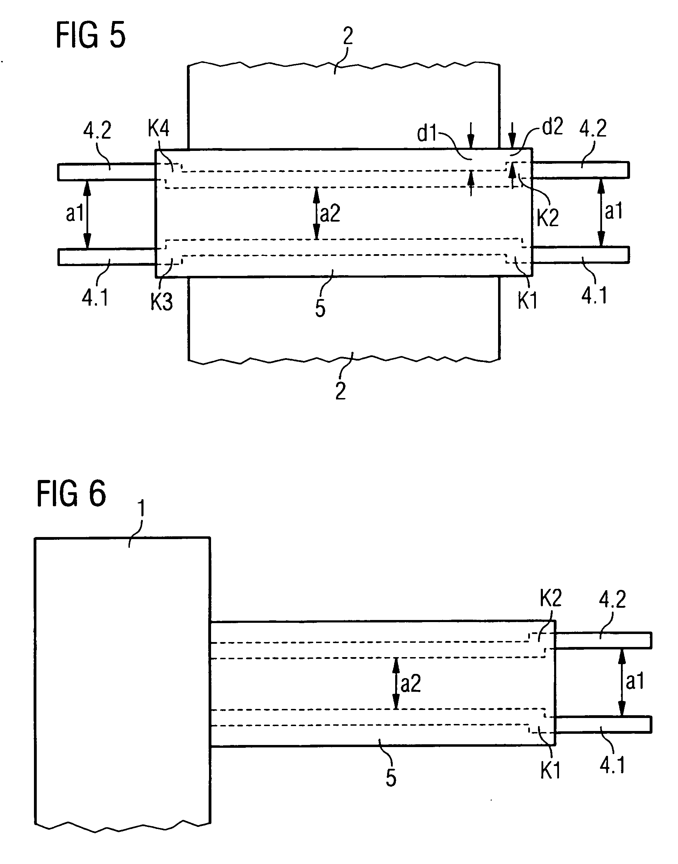

Die Figur 5 zeigt eine Skizze zur Veranschaulichung einer zweiten Ausführungsform der Erfindung. Gemäß dieser Ausführungsform ist durch eine Bohrung im Pumpengehäuse 2 eine elektrische Verbindungsvorrichtung geführt, die elektrische Leitungen 4.1 und 4.2 aufweist, die in Form von Flachstecker-Zungen ausgeführt sind. Diese elektrischen Leitungen verlaufen innerhalb einer Isolierhülse 5. Sowohl das motorgehäuseseitige Ende der Isolierhülse 5 als auch das elektronikgehäuseseitige Ende der Isolierhülse 5 ragen über die jeweilige Stirnseite des Pumpengehäuses 2 hinaus. Innerhalb des Bereichs des Pumpengehäuses weisen die elektrischen Leitungen 4.1 und 4.2 einen Abstand a2 voneinander auf. Weiterhin weisen innerhalb des Bereichs des Pumpengehäuses die elektrischen Leitungen 4.1. und 4.2 vom Rand der Bohrung des Pumpengehäuses stets einen Mindestabstand d1 auf. Dieser Mindestabstand ist notwendig, um im Betrieb ein Auftreten von Spannungsüberschlägen zu vermeiden. Außerhalb des Bereichs des Pumpengehäuses, aber noch innerhalb des Bereichs der Isolierhülse 5 ist die Leitung 4.1 mit Kröpfungen K1 und K3 und die Leitung 4.2 mit Kröpfungen K2 und K4 versehen. Durch diese Kröpfungen wird erreicht, dass die elektrischen Leitungen 4.1 und 4.2 bei ihrem Austritt aus der Isolierhülse 5 jeweils einen Abstand a1 voneinander haben, wobei gilt:

$$a2 < a1.$$

Dass durch diese Kröpfungen der Abstand d2 der Leitungen 4.1 und 4.2 vom äußeren Rand der Isolierhülse 5 kleiner ist als dl, ist unerheblich, da in diesem Bereich, der jeweils außerhalb des Bereichs des Pumpengehäuses liegt, keine Gefahr von Spannungsüberschlägen besteht.

Die mit dem Abstand a1 aus der Isolierhülse 5 austretenden elektrischen Leitungen bzw. Flachstecker-Zungen können in einen jeweiligen Gegenstecker des Elektronikgehäuses bzw. Motorgehäuses eingesetzt werden, deren Gegensteckerkontakte ebenfalls jeweils den Abstand a1 haben.

Durch die beschriebenen Kröpfungen der elektrischen Leitungen wird erreicht, dass die Leitungen im Bereich des Pumpengehäuses eng beieinander geführt werden können, wodurch die durch das Pumpengehäuse gehende Bohrung klein gehalten werden kann, und dass die Leitungen dennoch beidseitig mit einem jeweils vorhandenen Gegenstecker kontaktiert werden können, dessen Gegensteckerkontakte einen Abstand voneinander haben, der größer ist als der Abstand, mit welchem die Leitungen im Bereich des Pumpengehäuses geführt werden.

Wie aus der Figur 5 weiterhin ersichtlich ist, ist der Außendurchmesser der Isolierhülse 5 trotz der erfolgten Kröpfungen der Leitungen stets gleich, so dass das Durchstecken der elektrischen Verbindungsvorrichtung durch die Bohrung des Pumpengehäuses nicht beeinträchtigt ist.

Die Figur 6 zeigt eine Skizze zur Veranschaulichung einer dritten Ausführungsform der Erfindung. Bei dieser Ausführungsform bildet - ebenso wie es bereits oben im Zusammenhang mit der Figur 2 erläutert wurde - die aus der Isolierhülse 5 und den elektrischen Leitungen 4.1 und 4.2 bestehende elektrische Verbindungsvorrichtung eine bauliche Einheit mit dem Motorgehäuse 1. Aus der Figur 6 ist weiterhin ersichtlich, dass die elektrischen Leitungen 4.1 und 4.2 in der Nähe des elektronikgehäuseseitigen Endes der Isolierhülse 5 mit einer Kröpfung K1 bzw. K2 versehen sind. Durch diese Kröpfung wird der Abstand, den die elektrischen Leitungen voneinander haben, von a2 auf a1 erweitert. Mit diesem erweiterten Abstand a1 treten die elektrischen Leitungen 4.1 und 4.2 aus der Isolierhülse 5 aus und können in einen Gegenstecker des Elektronikgehäuses eingeführt werden, dessen Gegensteckerkontakte ebenfalls den Abstand a1 voneinander aufweisen.

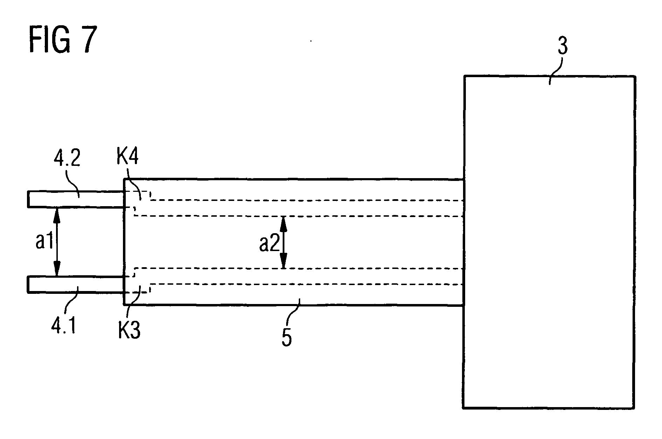

Die Figur 7 zeigt eine Skizze zur Veranschaulichung einer vierten Ausführungsform der Erfindung. Gemäß dieser Ausführungsform bildet die elektrische Verbindungsvorrichtung, die aus der Isolierhülse 5 und den elektrischen Leitungen 4.1 und 4.2 besteht, eine bauliche Einheit mit dem Elektronikgehäuse 3. Aus der Figur 7 geht weiterhin hervor, dass die elektrischen Leitungen innerhalb der Isolierhülse 5 jeweils eine Kröpfung K3 bzw. K4 aufweisen. Durch diese Kröpfung wird der Abstand der elektrischen Leitungen 4.1 und 4.2 voneinander von a2 auf a1 vergrößert. Mit diesem vergrößertem Abstand a1 treten die elektrischen Leitungen 4.1 und 4.2 motorgehäuseseitig aus der Isolierhülse 5 aus und können mit einem am Motorgehäuse befestigten Gegenstecker verbunden werden, dessen Gegensteckerkontakte ebenfalls den Abstand a1 voneinander aufweisen.

**Patentansprüche**

1. Motor-Pumpen-Aggregat, enthaltend in einer Hintereinanderanordnung ein Motorgehäuse (1), ein Pumpengehäuse (2) und ein Elektronikgehäuse (3), wobei von dem Motorgehäuse (1) durch das Pumpengehäuse (2) zumindest zwei gegeneinander elektrisch isolierte, von einer Isolierhülse (5) umgebene elektrische Leitungen (4.1, 4.2) zu dem Elektronikgehäuse führen, **dadurch gekennzeichnet, dass** die elektrischen Leitungen (4.1, 4.2) innerhalb der Isolierhülse (5) jeweils mit einer Kröpfung (K1, K2, K3, K4) versehen sind.

2. Motor-Pumpen-Aggregat nach Anspruch 1, **dadurch gekennzeichnet, dass** die elektrischen Leitungen als Flachstecker-Zungen ausgebildet sind.

3. Motor-Pumpen-Aggregat nach Anspruch 1 oder 2, **dadurch gekennzeichnet, dass** die Isolierhülse das Pumpengehäuse in axialer Richtung überragt und die Kröpfung in dem das Pumpengehäuse in axialer Richtung überragenden Bereich der Isolierhülse vorliegt .

4. Motor-Pumpen-Aggregat nach Anspruch 1 oder 2, **dadurch gekennzeichnet, dass** die Isolierhülse das Pumpengehäuse in axialer Richtung beidseitig überragt und eine Kröpfung in beiden das Pumpengehäuse in axialer Richtung überragenden Bereichen der Isolierhülse vorliegt .

5. Motor-Pumpen-Aggregat nach Anspruch 3 oder 4, **dadurch gekennzeichnet, dass** der Abstand (a2) der elektrischen Leitungen voneinander im Bereich des Pumpengehäuses kleiner ist als der Abstand (a1) der elektrischen Leitungen voneinander nach erfolgter Kröpfung außerhalb des Pumpengehäuses.

6. Motor-Pumpen-Aggregat nach einem der vorhergehenden Ansprüche, **dadurch gekennzeichnet, dass** die elektrischen Leitungen innerhalb der Isolierhülse jeweils mit einer Stufe (S) versehen sind derart, dass die Breite der elektrischen Leitungen an den beiden axialen Enden der Isolierhülse unterschiedlich ist .

7. Motor-Pumpen-Aggregat nach einem der vorhergehenden Ansprüche, **dadurch gekennzeichnet, dass** die elektrischen Leitungen inklusive der Isolierhülse ein einstückiges Bauteil mit dem Motorgehäuse bilden .

8. Motor-Pumpen-Aggregat nach einem der Ansprüche 1 - 6, **dadurch gekennzeichnet, dass** die elektrischen Leitungen in einen am Motorgehäuse vorgesehenen Gegenstecker eingesetzt sind.

9. Motor-Pumpen-Aggregat nach einem der Ansprüche 1 - 6 oder 8, **dadurch gekennzeichnet, dass** die elektrischen Leitungen inklusive der Isolierhülse ein einstückiges Bauteil mit dem Elektronikgehäuse bilden .

10. Motor-Pumpen-Aggregat nach einem der Ansprüche 1 - 8, **dadurch gekennzeichnet, dass** die elektrischen Leitungen in einen am Elektronikgehäuse vorgesehenen Gegenstecker eingesteckt sind.

11. Elektrische Verbindungsvorrichtung, aufweisend zumindest zwei gegeneinander elektrisch isolierte, von einer Isolierhülse umgebene elektrische Leitungen, welche innerhalb der Isolierhülse jeweils mit einer Kröpfung vorgesehen sind.

**12.** Elektrische Verbindungsvorrichtung nach Anspruch 11, **dadurch gekennzeichnet, dass** die elektrischen Leitungen als Flachstecker-Zungen ausgebildet sind.

**13.** Elektrische Verbindungsvorrichtung nach Anspruch 11 oder 12, **dadurch gekennzeichnet, dass** die elektrischen Leitungen innerhalb der Isolierhülse jeweils mit einer Stufe versehen sind derart, dass die Breite der elektrischen Leitungen an den beiden axialen Enden der Isolierhülse unterschiedlich ist.

**14.** Elektrische Verbindungsvorrichtung nach einem der Ansprüche 11 - 13, **dadurch gekennzeichnet, dass** die elektrischen Leitungen die Isolierhülse in axialer Richtung überragen.

**Claims**

**1.** Motor pump assembly containing, in a series arrangement, a motor housing (1), a pump housing (2) and an electronics housing (3), wherein at least two mutually electrically insulated electrical leads (4.1, 4.2) surrounded by an insulating sleeve (5) are ducted from the motor housing (1) through the pump housing (2) to the electronics housing, **characterised in that** inside the insulating sleeve (5) the electrical leads (4.1, 4.2) are each provided with an offset (K1, K2, K3, K4).

**2.** Motor pump assembly according to claim 1, **characterised in that** the electrical leads are embodied as flat connector lugs.

**3.** Motor pump assembly according to claim 1 or 2, **characterised in that** the insulating sleeve projects beyond the pump housing in the axial direction and the offset is disposed in the area of the insulating sleeve projecting in the axial direction beyond the pump housing.

**4.** Motor pump assembly according to claim 1 or 2, **characterised in that** the insulating sleeve projects beyond the pump housing in the axial direction on both sides and an offset is disposed in both areas of the insulating sleeve projecting in the axial direction beyond the pump housing.

**5.** Motor pump assembly according to claim 3 or 4, **characterised in that** the mutual spacing (a2) of the electrical leads is smaller in the area of the pump housing than the mutual spacing (a1) of the electrical leads outside the pump housing after an offset has been provided.

**6.** Motor pump assembly according to one of the preceding claims, **characterised in that** the electrical leads inside the insulating sleeve are each provided with a step (S) such that the width of the electrical leads is different at the two axial ends of the insulating sleeve.

**7.** Motor pump assembly according to one of the preceding claims, **characterised in that** the electrical leads, including the insulating sleeve, form a single-piece component with the motor housing.

**8.** Motor pump assembly according to one of claims 1 to 6, **characterised in that** the electrical leads are inserted into a mating connector provided on the motor housing.

**9.** Motor pump assembly according to one of claims 1 to 6 or 8, **characterised in that** the electrical leads, including the insulating sleeve, form a single-piece component with the electronics housing.

**10.** Motor pump assembly according to one of claims 1 to 8, **characterised in that** the electrical leads are plugged into a mating connector provided on the electronics housing.

**11.** Electrical connecting device having at least two mutually electrically insulated electrical leads surrounded by an insulating sleeve, which leads are each provided with an offset inside the insulating sleeve.

**12.** Electrical connecting device according to claim 11, **characterised in that** the electrical leads are embodied as flat connector lugs.

**13.** Electrical connecting device according to claim 11 or 12, **characterised in that** the electrical leads are each provided with a step inside the insulating sleeve such that the width of the electrical leads is different at the two axial ends of the insulating sleeve.

**14.** Electrical connecting device according to one of claims 11 to 13, **characterised in that** the electrical leads project beyond the insulating sleeve in the axial direction.

**Revendications**

**1.** Groupe moto-pompe contenant, dans une disposition en série, un carter de moteur (1), un corps de pompe (2) et un boîtier électronique (3), au moins deux lignes électriques (4.1, 4.2) entourées d'une gaine isolante (5) et isolées électriquement l'une de l'autre, menant du carter du moteur (1) à travers le corps de la pompe (2) au boîtier électronique, **caractérisé en ce que** les lignes électriques (4.1, 4.2) sont pourvues chacune d'un coudage à angle droit (K1, K2, K3, K4) à l'intérieur de la gaine isolante (5).

2. Groupe moto-pompe selon la revendication 1, **caractérisé en ce que** les lignes électriques sont conçues comme languettes de fiches plates.

3. Groupe moto-pompe selon la revendication 1 ou 2, **caractérisé en ce que** la gaine isolante fait saillie du corps de la pompe dans le sens axial et **en ce que** le coudage à angle droit se trouve dans la zone de la gaine isolante faisant saillie dans le sens axial du corps de la pompe.

4. Groupe moto-pompe selon la revendication 1 ou 2, **caractérisé en ce que** la gaine isolante fait saillie des deux côtés du corps de la pompe dans le sens axial et **en ce qu'**un coudage à angle droit se trouve dans les deux zones de la gaine isolante faisant saillie du corps de la pompe en direction axiale.

5. Groupe moto-pompe selon la revendication 3 ou 4, **caractérisé en ce que** l'espacement (a2) des lignes électriques les unes des autres dans la zone du corps de la pompe est inférieur à l'espacement (a1) des lignes électriques les unes des autres une fois le coudage à angle droit réalisé à l'extérieur du corps de la pompe.

6. Groupe moto-pompe selon l'une des revendications précédentes, **caractérisé en ce que** les lignes électriques sont pourvues chacune d'un palier (S) à l'intérieur de la gaine isolante, de sorte que la largeur des lignes électriques varie aux deux extrémités axiales de la gaine isolante.

7. Groupe moto-pompe selon l'une des revendications précédentes, **caractérisé en ce que** les lignes électriques, y compris la gaine isolante, forment un composant monobloc avec le carter du moteur.

8. Groupe moto-pompe selon l'une des revendications 1 à 6, **caractérisé en ce que** les lignes électriques sont placées dans une contre-fiche prévue sur le carter du moteur.

9. Groupe moto-pompe selon l'une des revendications 1 à 6 ou 8, **caractérisé en ce que** les lignes électriques, y compris la gaine isolante, forment un composant monobloc avec le boîtier électronique.

10. Groupe moto-pompe selon l'une des revendications 1 à 8, **caractérisé en ce que** les lignes électriques sont enfichées dans une contre-fiche prévue sur le boîtier électronique.

11. Dispositif de liaison électrique, comportant au moins deux lignes électriques entourées d'une gaine isolante et isolées électriquement l'une de l'autre, lesquelles sont chacune pourvues d'un coudage à angle droit à l'intérieur de la gaine isolante.

12. Dispositif de liaison électrique selon la revendication 11, **caractérisé en ce que** les lignes électriques sont conçues comme languettes de fiches plates.

13. Dispositif de liaison électrique selon la revendication 11 ou 12, **caractérisé en ce que** les lignes électriques sont pourvues chacune d'un palier à l'intérieur de la gaine isolante, de sorte que la largeur des lignes électriques varie aux deux extrémités axiales de la gaine isolante.

14. Dispositif de liaison électrique selon l'une des revendications 11 à 13, **caractérisé en ce que** les lignes électriques font saillie de la gaine isolante dans le sens axial.

FIG 1

FIG 2

## FIG 3

## FIG 4

FIG 5

FIG 6

# FIG 7